# EUROPEAN PATENT SPECIFICATION

(11) **EP 3 171 596 B1**
(45) Date of publication and mention of the grant of the patent: **06.07.2022**
(21) Application number: 16186290.9
(22) Date of filing: 30.08.2016
(51) Int. Cl.: H04N 19/167, H04N 19/124, H04N 19/17, H04N 19/14, G06T 7/11, H04N 19/176

(54) **IMAGE COMPRESSION WITH ADAPTIVE QUANTIZATION OF REGIONS OF INTEREST (ROI)**
BILDKOMPRESSION MIT ADAPTIVER QUANTISIERUNG VON INTERESSIERENDEN BILDREGIONEN
COMPRESSION D'IMAGE UTILISANT UNE QUANTIFICATION ADAPTATIVE POUR DES RÉGIONS D'INTÉRÊT

(30) Priority: 23.11.2015 CN 201510815633
(43) Date of publication of application: 24.05.2017
(73) Proprietor: Xiaomi Inc., Beijing 100085 (CN)
(72) Inventor: ZHANG, Tao, BEIJING, 100085 (CN); CHEN, Zhijun, BEIJING, 100085 (CN); LONG, Fei, BEIJING, 100085 (CN)
(74) Representative: Cabinet Beau de Loménie

(56) References cited:
- WO-A1-00/46999
- GB-A- 2 371 434
- VANTARAM SREENATH RAO ET AL: "Survey of contemporary trends in color image segmentation", JOURNAL OF ELECTRONIC IMAGING, SPIE / IS & T, 1000 20TH ST. BELLINGHAM WA 98225-6705 USA, vol. 21, no. 4, 1 October 2012 (2012-10-01), page 40901, XP060026123, ISSN: 1017-9909, DOI: 10.1117/1.JEI.21.4.040901 [retrieved on 2012-10-04]

## Description

### TECHNICAL FIELD

The present invention is related to the field of computer technologies, and more particularly, to an image compression method and apparatus, a computer program and a recording medium.

### BACKGROUND

With fast development of the network technology, cloud storage gradually becomes one of the important storage modes for people. Users can store their own data in the cloud and check information stored in the cloud via a terminal device. For example, the users can upload photos in mobile phones to the cloud for back-up.

However, as more and more photos are stored in the cloud, the cloud is under increasing storage pressure, so image compression for reducing the image storage space is in need. The JPEG (Joint Photographic Experts Group) compression mode in the related art may reduce the image storage space but also reduces the image quality.

Document WO 00/46999 A1 discloses a technique for assigning quantization levels (e.g., quantizer values) used during video compression processing. In particular, an image may be segmented into one or more different regions, and a temporal prediction model is separately applied to each region to assign a quantization level to be used to quantize the transform coefficients for the macroblocks of that region.

Document GB 2 371 434 A discloses a transferal of video data by a method comprising segmenting a digital video image into at least a first and second segment.

### SUMMARY

The invention is defined in the appended set of claims.

To overcome the above problems in the related arts, the present invention provides an image compression method and apparatus, a computer program and a recording medium.

To solve the above technical problems, the embodiments of the present invention disclose the following technical schemes.

According to a first aspect of embodiments of the present invention, there is provided an image compression method, comprising:
acquiring a target image to be compressed;
dividing the target image into at least two to-be-compressed regions;
dividing the target image into pixel blocks of preset sizes, and converting data in each pixel block into frequency-domain data;
acquiring a quantization table corresponding to each to-be-compressed region, wherein different quantization tables correspond to different quantization scales;
quantizing the frequency-domain data corresponding to the pixel blocks in each to-be-compressed region by use of the quantization table corresponding to the to-be-compressed region; and
encoding the quantized image data to obtain a compressed image.

According to the image compression method provided by the first aspect, quantization tables with relatively small quantization scales are used by some to-be-compressed regions, so as to retain more detailed information; and while quantization tables with relatively large quantization scales are used by other to-be-compressed regions, so as to greatly reduce the image storage space. By utilizing the image compression method for image compression, not only is the image quality of some regions guaranteed, but also the image storage space is greatly reduced. Furthermore, said dividing the target image into at least two to-be-compressed regions comprises:
determining a ROI (Region Of Interest) and a non-ROI in the target image;
and wherein said acquiring the quantization table corresponding to each to-be-compressed region comprises:
   acquiring a first kind of quantization tables corresponding to the ROI and acquiring a second kind of quantization tables corresponding to the non-ROI, wherein the quantization scales of the second kind of quantization tables are larger than those of the first kind of quantization tables.

According to the image compression method provided by the embodiment of the present invention, the ROI adopts the quantization tables with relatively small quantization scales, and the non-ROI adopts the quantization tables with relatively large quantization scales. After such treatment, more detailed information can be retained in an effective region of the image, and meanwhile, the non-ROI is greatly compressed. The image compression method guarantees the image quality of the ROI on the premise of greatly reducing the image storage space. The determining the ROI and the non-ROI in the target image comprises: detecting an image salient region in the target image;
performing image segmentation on the detected image salient region;
filtering and converging an image segmentation result to obtain at least one candidate ROI; and
determining the ROI from the at least one candidate ROI, and determining the region beyond the ROI in the target image as the non-ROI.

Finally, said acquiring the quantization table corresponding to each to-be-compressed region comprises:
determining quantization values corresponding to high-frequency parts in the first kind of quantization tables according to values of high-frequency components in the pixel blocks of the ROI and a preset percent, the preset percent being the percent of non-zero values in the quantization result.

In a particular embodiment, said dividing the target image into the pixel blocks of preset sizes comprises: dividing the target image into 8^{∗}8 pixel blocks.

According to a second aspect of embodiments of the present invention, there is provided an image compression apparatus as defined by independent claim 3.

According to a further aspect, the invention is also directed to a computer program for executing the steps of an image compression method as defined above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as defined above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions of the embodiments of this invention have the following advantageous effects: the to-be-compressed target image is acquired and divided into at least two to-be-compressed regions. The target image is also divided into the pixel blocks of preset sizes, and data in each pixel block are converted into frequency-domain data. The quantization table corresponding to each to-be-compressed region is acquired, the different quantization tables correspond to different quantization scales, and the different to-be-compressed regions can be quantized by use of the quantization tables with different quantization scales. Quantization tables with relatively small quantization scales are used by some to-be-compressed regions, so as to retain more detailed information; and quantization tables with relatively large quantization scales are used by other to-be-compressed regions, so as to greatly reduce the image storage space. By utilizing the image compression method for image compression, not only the image quality of some regions is guaranteed, but also the image storage space is greatly reduced.

It should be understood that both the foregoing general description and the following detailed description are only exemplary and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing an image compression method according to an exemplary embodiment.
Fig. 2 is a flow chart showing another image compression method according to an exemplary embodiment.
Fig. 3 is a flow chart showing the determination of a ROI and a non-ROI according to an exemplary embodiment.
Fig. 4 is a schematic drawing showing the division of an image into pixel blocks according to an exemplary embodiment.
Fig. 5 is a schematic drawing showing the Zig-Zag arrangement according to an exemplary embodiment.
Fig. 6 is a flow chart showing another image compression method according to an exemplary embodiment.
Fig. 7 is a block diagram of an image compression apparatus according to an exemplary embodiment.
Fig. 8 is a block diagram of a first division module according to an exemplary embodiment.
Fig. 9 is a block diagram of an apparatus for image compression according to an exemplary embodiment.
Fig. 10 is a block diagram of another apparatus for image compression according to an exemplary embodiment.

Through the above accompany drawings, the specific embodiments of the invention have been shown, for which more detailed description will be given as below. These drawings and textual description are not intended to limit the scope of the concept of the invention in any manner, but to explain the concept of the invention to those skilled in the art through particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

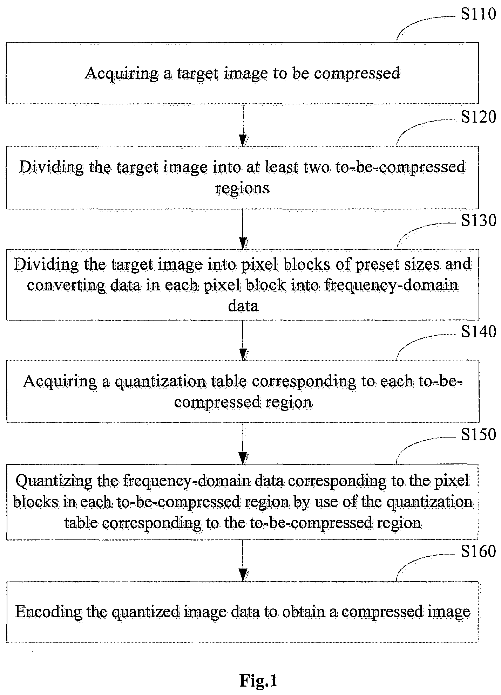

Fig. 1 is a flow chart showing an image compression method according to an exemplary embodiment, and the method can be applied to a terminal device or a cloud server. As shown in Fig. 1, the image compression method provided by this embodiment of the present invention comprises the steps as follows.

S110, acquiring a target image to be compressed (so-called "to-be-compressed target image").

In one embodiment of the invention, the target image may be a picture to be uploaded to a server. Before the picture is uploaded to the server, the image compression method provided by the embodiment is utilized for compression, so that network traffic resources required for picture uploading are reduced, and meanwhile, the storage pressure of the server is relieved.

In another embodiment of the invention, the target image may be a picture stored locally in the terminal device, and after the image compression method provided by the embodiment is utilized for compression, the storage pressure of the terminal device is relieved.

S120, dividing the target image into at least two to-be-compressed regions.

Target objects may be identified from the target image at first, then the target image is segmented, and all regions obtained from segmentation are to-be-compressed regions.

The number of the divided to-be-compressed regions is related to the numbers and the positions of the target objects and non-target objects in the target image. The more dispersed the target objects are, the more the divided to-be-compressed regions are.

S130, dividing the target image into pixel blocks of preset sizes and converting data in each pixel block into frequency-domain data.

For example, data in each pixel block is subjected to DCT (Discrete Cosine Transform) which converts a signal from a time domain to a frequency domain. Generally, DCT divides an integral image into N^{∗}N pixel blocks at first and then conducts DCT operation on the N^{∗}N pixel blocks one by one, wherein N is the number of pixels in horizontal and vertical directions, and usually could be 8, that is, 8^{∗}8 pixel blocks are obtained.

S140, acquiring a quantization table corresponding to each to-be-compressed region, wherein different quantization tables correspond to different quantization scales.

The different to-be-compressed regions are quantized by use of the quantization tables with different quantization scales. The larger the quantization scales are, the fuzzier an obtained picture is, and on the contrary, the smaller the quantization scales are, the more details the compressed picture retains and the more definite the picture is.

S150, quantizing the frequency-domain data corresponding to the pixel blocks in each to-be-compressed region by use of the quantization table corresponding to the to-be-compressed region.

S160, encoding the quantized image data to obtain a compressed image.

According to the image compression method provided by the embodiment, the to-be-compressed target image is acquired and divided into at least two to-be-compressed regions. The target image is divided into the pixel blocks of preset sizes, and data in each pixel block are converted into frequency-domain data. The quantization table corresponding to each to-be-compressed region is acquired, the different quantization tables correspond to different quantization scales, and the different to-be-compressed regions can be quantized by use of the quantization tables with different quantization scales. Quantization tables with relatively small quantization scales are used by some to-be-compressed regions, so as to retain more detailed information; and quantization tables with relatively large quantization scales are used by other to-be-compressed regions, so as to greatly reduce the image storage space. By utilizing the image compression method for image compression, not only is the image quality of some regions guaranteed, but also the image storage space is greatly reduced.

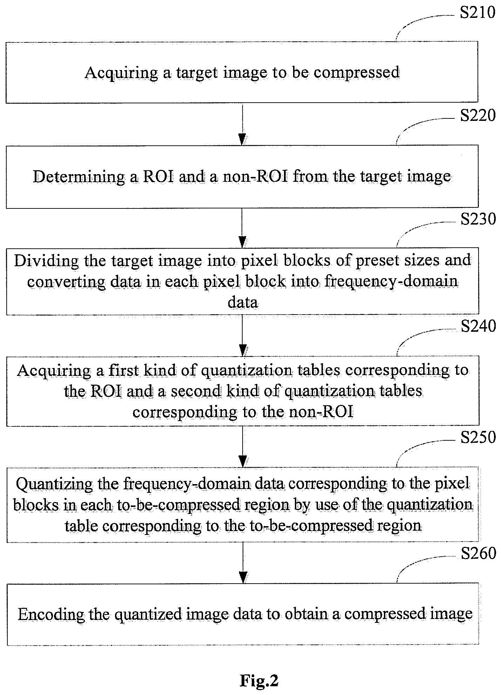

Fig. 2 is a flow chart showing another image acquiring method according to an exemplary embodiment. As shown in Fig. 2, the method may comprise the steps as follows.

S210, acquiring a to-be-compressed target image.

S220, determining a ROI (Region Of Interest) and a non-ROI in the target image.

The ROI and the non-ROI in the target image may be determined by the ROI detection algorithm, which is to draw the outline of a region needing to be processed with a square, circle, ellipse, irregular polygon, etc. in a processed image during machine vision and image processing, the region is named as ROI, which is a key point concerned by image analysis and is determined to facilitate further processing, and using the ROI to determine a concerned target in the image shortens the image processing time and improves the image processing precision.

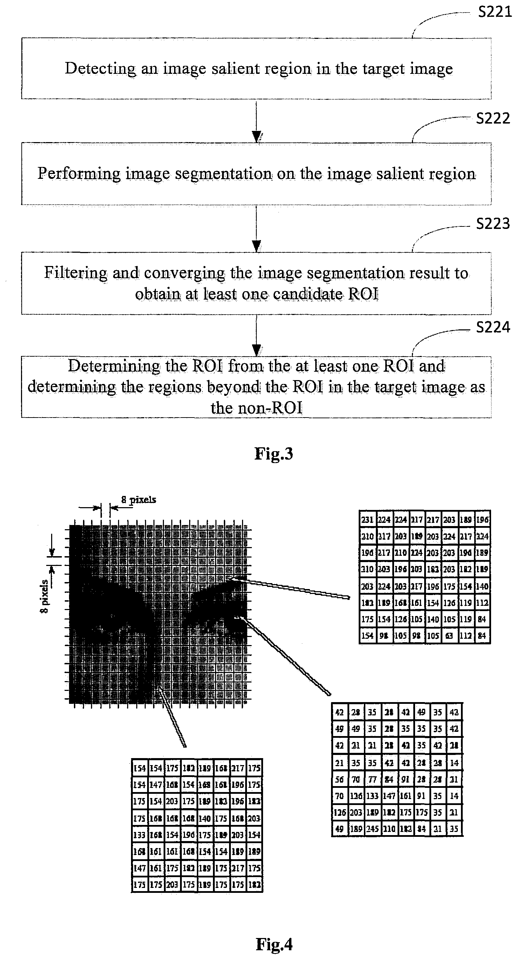

Fig. 3 is a flow chart showing the determination of a ROI and a non-ROI according to an exemplary embodiment, and as shown in Fig. 3, the determination of the ROI and the non-ROI comprises steps S221-S224 as follows.

S221, detecting an image salient region in the target image.

Wherein, the image salient region is a small region in which the image color obviously changes.

S222, performing image segmentation on the salient region.

Image segmentation is a technology and a process that divide the image into a plurality of specific regions with peculiar properties and provide interesting targets, such as a K-means algorithm.

S223, filtering and converging an image segmentation result to obtain at least one candidate ROI.

S224, determining the ROI from the at least one candidate ROI, and determining the region beyond the ROI in the target image as the non-ROI.

S230, dividing the target image into pixel blocks of preset sizes and converting data in each pixel block into frequency-domain data.

Fig. 4 is a schematic drawing showing the division of an image into pixel blocks according to an exemplary embodiment, as shown in Fig. 4, the original image is divided into a plurality of 8^{∗}8 pixel blocks, Fig. 4 shows data corresponding to three of the pixel blocks, and the data are all time-domain data.

Generally, a 8^{∗}8 conversion coefficient matrix is obtained after 8^{∗}8 two-dimensional pixel blocks are subjected to DCT, and all coefficients have specific physical meanings. For example, when U=0 and V=0, F (0, 0) is the mean value of the original 64 data, equal to a DC component also known as a DC coefficient. Along with increase of U and V, other 63 coefficients represent the values of horizontal spatial frequency and vertical spatial frequency components (high-frequency components), and most of the 63 coefficients are positive and negative floating point numbers also known as AC coefficients. In the 8^{∗}8 coefficient matrix subjected to DCT, low-frequency components are centralized at the upper left corner of the matrix while the high-frequency components are centralized at the lower right corner of the matrix. The target image is divided into the 8^{∗}8 pixel blocks and each pixel block comprises 64 pixel points.

S240, acquiring a first kind of quantization tables corresponding to the ROI and a second kind of quantization tables corresponding to the non-ROI.

The quantization scales of the second kind of quantization tables are larger than those of the first kind of quantization tables.

The quantization values corresponding to high-frequency parts in the first kind of quantization tables are determined according to values of high-frequency components in the pixel blocks of the ROI and a preset percent, wherein the preset percent is the percent of non-zero values in the quantization result and could be set as required by a user.

The quantization values in the second kind of quantization tables are determined according to the values in the pixel blocks in the non-ROI and the preset percent.

It should be noted that the same or different quantization tables can be used for different ROIs, in the same way, the same or different quantization tables can also be used for different non-ROIs, however, the values at the lower right corners in the quantization tables corresponding to the non-ROIs are much larger than data at corresponding positions in the quantization tables of the ROIs.

The values of the first kind of quantization tables are determined according to the values of high-frequency components in the pixel blocks of the ROIsand the preset percent, wherein the preset percent is the percent of non-zero values in the quantization result. For example, the preset percent is 60, that is, at least 60 percent of values in the quantization result after quantization of data matrices corresponding to the pixel blocks are not zero. Together with the values in the data matrices corresponding to the pixel blocks, the values in the quantization tables are determined.

S250, quantizing the frequency-domain data corresponding to the pixel blocks in each to-be-compressed region by use of the quantization table corresponding to the to-be-compressed region.

Quantization is the result of dividing pixel values by values corresponding to the quantization tables. As for the 8^{∗}8 pixel blocks, correspondingly, the quantization tables also adopt 8^{∗}8 matrices, and the pixel values in the pixel blocks are divided by the values at the corresponding positions in the quantization tables to obtain the quantization result, which is also a 8^{∗}8 matrix.

The drastic brightness or grey changing parts, such as edges, in the image correspond to the high-frequency components which mainly measure the image edges and contours, while the little changed parts, for example, large color block regions, correspond to low-frequency components which mainly measure the intensity of the whole picture comprehensively. Therefore, the low-frequency components are more important than the high-frequency components. As the low-frequency components are at the upper left corner of data in the pixel matrix corresponding to the pixel blocks while the high-frequency components are at the lower right corner, the values at the upper left corners of the quantization tables are relatively small, the values at the lower right corners are relatively large, and accordingly, the purposes of maintaining the low-frequency components and inhibiting the high-frequency components are achieved.

ROIs are deeply concerned parts in the target image, such as the target objects in the image, while the non-ROIs are not-concerned images in the target image, such as background images. Therefore, the images in the ROIs should be as definite as possible, and low definition of the non-ROIs not concerned by the users causes little influence. Based on the above, the pixel blocks of the ROI may adopt the quantization tables with relatively small quantization scales, and the pixel blocks of the non-ROI may adopt the quantization tables with relatively large quantization scales.

Table 1 shows an original pixel data matrix (channel Y of YbCbCr) for an exemplary block in an ROI according to an exemplary embodiment. Table 2 shows the corresponding matrix obtained after DCT of the pixel values in Table 1. Table 3 shows the quantization result of the Y channel DCT of the exemplary block.

**Table 1**

| | | | | | | | |
|---|---|---|---|---|---|---|---|
| 231 | 224 | 224 | 217 | 217 | 203 | 189 | 196 |
| 210 | 217 | 203 | 189 | 203 | 224 | 217 | 224 |
| 196 | 217 | 210 | 224 | 203 | 203 | 196 | 189 |
| 210 | 203 | 196 | 203 | 182 | 203 | 182 | 189 |
| 203 | 224 | 203 | 217 | 196 | 175 | 154 | 140 |
| 182 | 189 | 168 | 161 | 154 | 126 | 119 | 112 |
| 175 | 154 | 126 | 105 | 140 | 105 | 119 | 84 |
| 154 | 98 | 105 | 98 | 105 | 63 | 112 | 84 |

**Table 2**

| | | | | | | | |
|---|---|---|---|---|---|---|---|
| 174 | 19 | 0 | 3 | 1 | 0 | -3 | 1 |
| 52 | -13 | -3 | -4 | -4 | -4 | 5 | -8 |
| -18 | -4 | 8 | 3 | 3 | 2 | 0 | 9 |
| 5 | 12 | -4 | 0 | 0 | -5 | -1 | 0 |
| 1 | 2 | -2 | -1 | 4 | 4 | 2 | 0 |
| -1 | 2 | 1 | 3 | 0 | 0 | 1 | 1 |
| -2 | 5 | -5 | -5 | 3 | 2 | -1 | -1 |
| 3 | 5 | -7 | 0 | 0 | 0 | -4 | 0 |

**Table 3**

| | | | | | | | |
|---|---|---|---|---|---|---|---|
| 10 | 1 | 0 | 0 | 0 | 0 | 0 | 0 |
| 4 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |
| 0 | 0 | 0 | 0 | 0 | 0 | 0 | 0 |

S260, encoding the quantized image data to obtain a compressed image.

Encoding information is divided into two types, in one type, an element at [0, 0] in each 8^{∗}8 quantization result matrix F is a DC coefficient representing the mean value of 8^{∗}8 sub-blocks, F[0, 0] is independently encoded in JPEG, and as the difference between the DC coefficients of every two adjacent 8^{∗}8 sub-blocks is very small, differential encoding DPCM is adopted to improve the compression ratio, that is, the difference value of the DC coefficients of the adjacent sub-blocks is encoded.

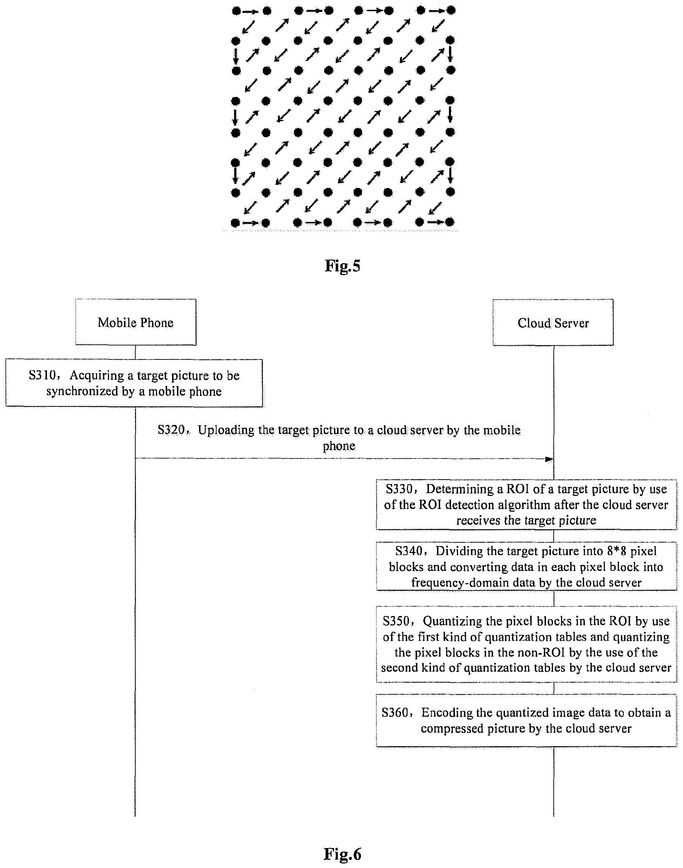

In the other type, other 63 sub-blocks in the 8^{∗}8 quantization result matrix F, namely AC coefficients, adopt RLE (Run-length encode). In order to ensure that low-frequency components appear before high-frequency components to increase the number of continuous '0' in a travel, the 63 elements adopt the Zig-Zag arrangement mode as shown in Fig. 5.

In order to further improve the compression ratio, entropy encoding of the RLE result is needed, for example, Huffman encoding may be selected.

After encoding by the above modes, more detailed information can be retained in the ROI of the obtained image, and meanwhile, the non-ROI is greatly compressed.

According to the image compression method provided by the embodiment, during image compression, the ROI and non-ROI are quantized by the quantization tables with different quantization scales, wherein the ROI adopts the quantization tables with relatively small quantization scales, that is, the values in the quantization tables are relatively small; and the non-ROI adopts the quantization tables with relatively large quantization scales, that is, the values in the quantization tables are relatively large. After such treatment, more detailed information can be retained in an effective region of the image, and meanwhile, the non-ROI is greatly compressed. The image compression method guarantees the image quality of the ROI on the premise of greatly reducing the image storage space.

Fig. 6 is a flow chart showing another image compressionmethod according to an exemplary embodiment. In the embodiment, a server conducts image compression, and as shown in Fig. 6, the image compression method provided for an example may comprise the steps as follows.

S310, acquires a target picture to be synchronized by a mobile phone.

S320, uploading the target picture to a cloud server by the mobile phone.

S330, determining a ROI of a target picture by use of the ROI detection algorithm after the cloud server receives the target picture.

S340, dividing the target picture into 8^{∗}8 pixel blocks and converting data in each pixel block into frequency-domain data by the cloud server.

S350, quantizing the pixel blocks in the ROI by use of the first kind of quantization tables and quantizing the pixel blocks in the non-ROI by the use of the second kind of quantization tables by the cloud server, wherein quantization scales of the first kind of quantization tables are smaller than those of the second kind of quantization tables.

S360, encoding the quantized image data to obtain a compressed image by the cloud server.

The image compression method provided by this embodiment is completed by the server with rich resources, so that the time required for picture compression is shortened, the picture compression speed is increased, and the picture compression rate is improved.

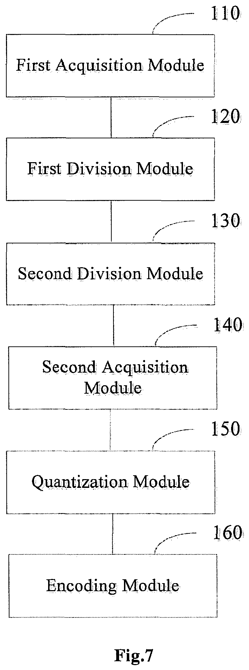

Fig. 7 is a block diagram showing an image compression device according to an exemplary embodiment, and the image compression device provided by this embodiment may be applied to a terminal device or a cloud server. As shown in Fig. 7, the image compression device may comprise a first acquisition module 110, a first division module 120, a second division module 130, a second acquisition module 140, a quantization module 150 and an encoding module 160.

The first acquisition module 110 is configured to acquire a to-be-compressed target image.

The target image may be a picture to be uploaded to the server or a picture stored locally in the terminal device.

The first division module 120 is configured to divide the target image acquired by the first acquisition module 110 into at least two to-be-compressed regions.

The first division module may divide the target image into a ROI and a non-ROI by use of the ROI detection algorithm.

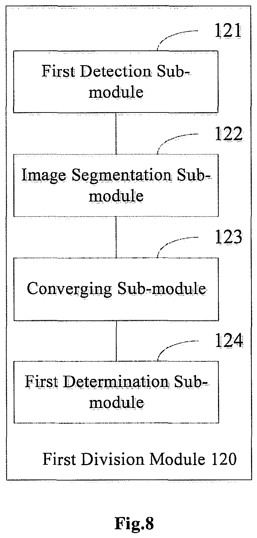

Fig. 8 is a block diagram of a first division module according to an exemplary embodiment. As shown in Fig. 8, the first division module 120 comprises a first detection sub-module 121, an image segmentation sub-module 122, a converging sub-module 123 and a first determination sub-module 124.

The first detection sub-module 121 is configured to detect an image salient region in the target image. The image segmentation sub-module 122 is configured to perform image segmentation on the detected image salient region. The converging sub-module 123 is configured to filter and converge an image segmentation result to obtain at least one candidate ROI. The first determination sub-module 124 is configured to determine the ROI from the at least one candidate ROI, and determine the region beyond the ROI in the target image as the non-ROI.

The second division module 130 is configured to divide the target image acquired by the first acquisition module 110 into pixel blocks of preset sizes and convert data in each pixel block into frequency-domain data.

The second division module is configured to divide the integral image into N^{∗}N pixel blocks, wherein N is the number of pixels in the horizontal and vertical directions and is generally 8, that is, 8^{∗}8 pixel blocks are obtained. Then, data conversion operation, such as DCT, of the N^{∗}N pixel blocks is performed one by one.

The second acquisition module 140 is configured to acquire a quantization table corresponding to each to-be-compressed region obtained by the first division module 120, wherein different quantization tables correspond to different quantization scales.

The second acquisition module is configured to acquire a first kind of quantization tables corresponding to the ROI and acquire a second kind of quantization tables corresponding to the non-ROI, wherein the quantization scales of the second kind of quantization tables are larger than those of the first kind of quantization tables.

The quantization values corresponding to high-frequency parts in the first kind of quantization tables are determined according to the values of high-frequency components in the pixel blocks of the ROI and a preset percent, wherein the preset percent is the percent of non-zero values in the quantization result and can be set as required by a user.

The quantization values in the second kind of quantization tables are determined according to the values in the pixel blocks in the non-ROI and a preset percent.

The quantization module 150 is configured to quantize the frequency-domain data corresponding to the pixel blocks in each to-be-compressed region by use of the quantization table corresponding to the to-be-compressed region.

Quantization is the result of dividing pixel values by values corresponding to the quantization tables. As for the 8^{∗}8 pixel blocks, correspondingly, the quantization tables also adopt 8^{∗}8 matrices, and the pixel values in the pixel blocks are divided by the values at the corresponding positions in the quantization tables to obtain the quantization result, which is also a 8^{∗}8 matrix.

The encoding module 160 is configured to encode image data quantized by the quantization module 150 to obtain a compressed image.

According to the image compression apparatus provided by the embodiment, the to-be-compressed target image is acquired and divided into at least two to-be-compressed regions. The target image is divided into the pixel blocks of preset sizes, and data in each pixel block are converted into frequency-domain data. The quantization table corresponding to each to-be-compressed region is acquired, the different quantization tables correspond to different quantization scales, and the different to-be-compressed regions can be quantized by use of the quantization tables with different quantization scales. Quantization tables with relatively small quantization scales are used by some to-be-compressed regions, so as to retain more detailed information; and quantization tables with relatively large quantization scales are used by other to-be-compressed regions, so as to greatly reduce the image storage space. By utilizing the image compression apparatus for image compression, not only the image quality of some regions is guaranteed, but also the image storage space is greatly reduced.

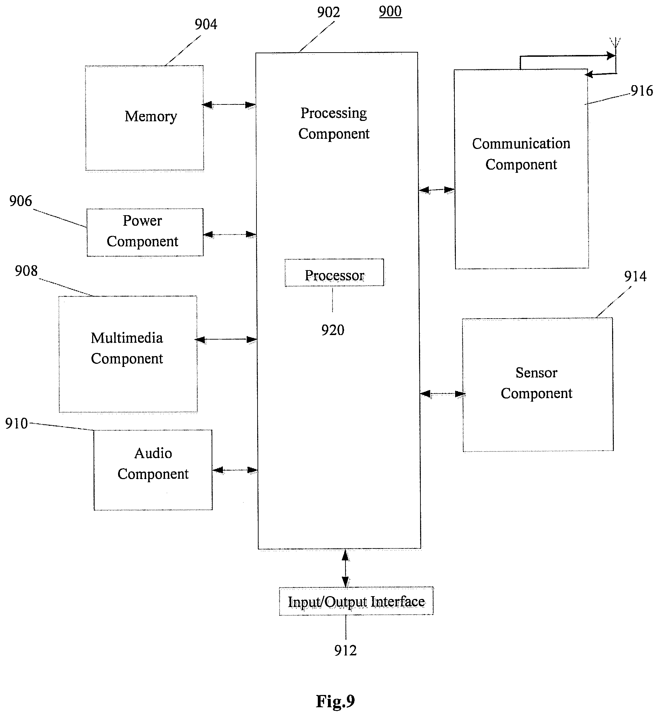

Fig. 9 is a block diagram of an apparatus 900 for image compression according to an exemplary embodiment. Fox example, the apparatus 900 may be a mobile phone, a computer, a digital broadcast terminal, a message transceiver, a game console, a tablet device, a medical device, fitness equipment, a personal digital assistant, or the like.

Referring to Fig. 9, the apparatus 900 may include one or more following components: a processing component 902, a memory 904, a power component 906, a multimedia component 908, an audio component 910, an input/output (I/O) interface 912, a sensor component 914 and a communication component 916.

The processing component 902 typically controls overall operations of the apparatus 900, such as the operations associated with display, telephone calls, data communications, camera operations and recording operations. The processing component 902 may include one or more processors 920 to execute instructions to perform all or part of the steps in the above described methods. Moreover, the processing component 902 may include one or more modules which facilitate the interaction between the processing component 902 and other components. For example, the processing component 902 may include a multimedia module to facilitate the interaction between the multimedia component 908 and the processing component 902.

The memory 904 is configured to store various types of data to support the operation of the apparatus 900. Examples of such data include instructions for any applications or methods operated on the apparatus 900, contact data, phonebook data, messages, pictures, video, etc. The memory 904 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 906 provides power to various components of the apparatus 900. The power component 906 may include a power supply management system, one or more power sources, and any other components associated with the generation, management, and distribution of power in the apparatus 900.

The multimedia component 908 includes a screen providing an output interface between the apparatus 900 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes and gestures on the touch panel. The touch sensors may not only sense a boundary of a touch or swipe action, but also sense a period of time and a pressure associated with the touch or swipe action. In some embodiments, the multimedia component 908 includes a front camera and/or a rear camera. The front camera and/or the rear camera may receive an external multimedia datum while the apparatus 900 is in an operation mode, such as a photographing mode or a video mode. Each of the front and rear cameras may be a fixed optical lens system or have a focus and optical zoom capability.

The audio component 910 is configured to output and/or input audio signals. For example, the audio component 910 includes a microphone (MIC) configured to receive an external audio signal when the apparatus 900 is in an operation mode, such as a call mode, a recording mode, and a voice recognition mode. The received audio signal may be further stored in the memory 904 or transmitted via the communication component 916. In some embodiments, the audio component 910 further includes a speaker to output audio signals.

The I/O interface 912 provides an interface between the processing component 902 and peripheral interface modules, such as a keyboard, a click wheel, buttons, and the like. The buttons may include, but are not limited to, a home button, a volume button, a starting button, and a locking button.

The sensor component 914 includes one or more sensors to provide status assessments of various aspects of the apparatus 900. For instance, the sensor component 914 may detect an open/closed status of the apparatus 900, relative positioning of components, e.g., the display and the keypad, of the apparatus 900, a change in position of the apparatus 900 or a component of the apparatus 900, a presence or absence of user's contact with the apparatus 900, an orientation or an acceleration/deceleration of the apparatus 900, and a change in temperature of the apparatus 900. The sensor component 914 may include a proximity sensor configured to detect the presence of nearby objects without any physical contact. The sensor component 914 may also include a light sensor, such as a CMOS or CCD image sensor, for use in imaging applications. In some embodiments, the sensor component 914 may also include an accelerometer sensor, a gyroscope sensor, a magnetic sensor, a pressure sensor or a temperature sensor.

The communication component 916 is configured to facilitate communication, wired or wirelessly, between the apparatus 900 and other apparatuses. The apparatus 900 can access a wireless network based on a communication standard, such as WiFi, 2G, or 3G, or a combination thereof. In one exemplary embodiment, the communication component 916 receives a broadcast signal or broadcast associated information from an external broadcast management system via a broadcast channel. In one exemplary embodiment, the communication component 916 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 900 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium comprising instructions, such as comprised in the memory 904, executable by the processor 920 in the apparatus 900, for performing the above-described methods. For example, the non-transitory computer-readable storage medium may be a ROM, a RAM, a CD-ROM, a magnetic tape, a floppy disc, an optical data storage device, and the like.

There is provided a non-transitory computer-readable storage medium, when instructions in the storage medium are executed by the processor of the mobile terminal, the target device can perform an image compression method which comprises:
acquiring a to-be-compressed target image;
dividing the target image into at least two to-be-compressed regions;
dividing the target image into pixel blocks of preset sizes, and converting data in each pixel block into frequency-domain data;
acquiring a quantization table corresponding to each to-be-compressed region, wherein different quantization tables correspond to different quantization scales;
quantizing the frequency-domain data corresponding to the pixel blocks in each to-be-compressed region by use of the quantization table corresponding to the to-be-compressed region; and
encoding the quantized image data to obtain a compressed image.

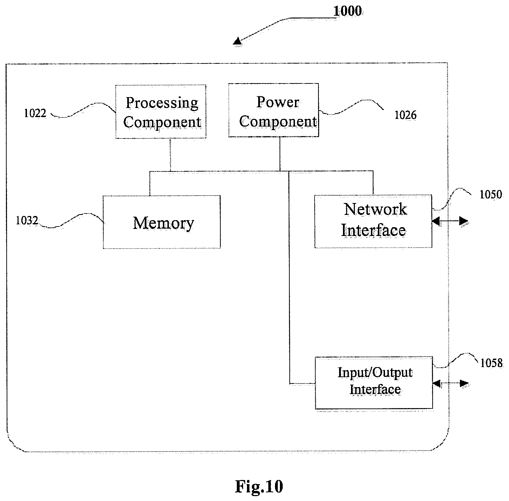

Fig. 10 is a block diagram of an apparatus 1000 for image compression according to an exemplary embodiment. For example, the device 1000 may be a server. Referring to Fig. 10, the apparatus 1000 comprises a processing component 1022, and further comprises one or more processors as well as a memory source represented by a memory 1032 configured to store instructions executable by the processing component 1022, such as an application program. The application program stored in the memory 1032 may comprise one or more modules, each of which corresponds to a group of instructions. Besides, the processing component 1022 is configured to execute instructions so as to execute the above embodiments of the image compression method.

The apparatus 1000 may also comprise a power component 1026 configured to perform power management of the apparatus 1000, a wired or wireless network interface 1050 configured to connect the apparatus 1000 to a network, and an input/output interface 1058. The apparatus 1000 may operate an operating system stored in the memory 1032, such as Windows ServerTM, Mac OS XTM, UnixTM, LinuxTM, FreeBSDTM or the like.

It is intended that the specification and examples be considered as exemplary only, with the scope of the invention being indicated by the following claims.

## Claims

1. An image compression method, **characterized by** comprising:
acquiring (S101) a target image to be compressed;
dividing (S120) the target image into at least two to-be-compressed regions;
dividing (S130) the target image into pixel blocks of preset sizes, and converting data in each pixel block into frequency-domain data;
acquiring (S140) a quantization table corresponding to each to-be-compressed region, wherein different quantization tables are acquired for different to-be-compressed regions and correspond to different quantization scales;
quantizing (S150) the frequency-domain data corresponding to the pixel blocks in each to-be-compressed region by use of the quantization table corresponding to the to-be-compressed region; and
encoding (S160) the quantized image data to obtain a compressed image;
wherein said dividing the target image into at least two to-be-compressed regions comprises: determining (S220) a ROI, Region Of Interest, and a non-ROI in the target image; and
wherein said determining the ROI, Region Of Interest,
and the non-ROI in the target
image comprises:
detecting (S221) an image salient region in the target image;
performing (S222) image segmentation on the detected image salient region;
filtering (S223) and converging an image segmentation result to obtain at least one candidate ROI; and
determining (S224) the ROI from the at least one candidate ROI, and determining the region beyond the ROI in the target image as the non-ROI;
wherein said acquiring (S140) the quantization table corresponding to each to-be-compressed region comprises:
acquiring (S240) a first kind of quantization tables corresponding to the ROI and acquiring (S240) a second kind of quantization tables corresponding to the non-ROI, wherein the quantization scales of the second kind of quantization tables are larger than those of the first kind of quantization tables; and
determining quantization values corresponding to high-frequency parts in the first kind of quantization tables according to values of high-frequency components in the pixel blocks of the ROI and a preset percent, the preset percent being the percent of non-zero values in the quantization result.

2. The method of claim 1, **characterized in that** dividing the target image into the pixel blocks of preset sizes comprises: dividing the target image into 8^{∗}8 pixel blocks.

3. An image compression apparatus, **characterized by** comprising:
a first acquisition module (110) configured to acquire a target image to be compressed;
a first division module (120) configured to divide the target image acquired by the first acquisition module into at least two to-be-compressed regions;
a second division module (130) configured to divide the target image acquired by the first acquisition module into pixel blocks of preset sizes, and convert data in each pixel block into frequency-domain data;
a second acquisition module (140) configured to acquire a quantization table corresponding to each to-be-compressed region obtained by the first division module, said second acquisition module being configured to acquire different quantization tables for different to-be-compressed regions, wherein different quantization tables correspond to different quantization scales;
a quantization module (150) configured to quantize the frequency-domain data corresponding to the pixel blocks in each to-be-compressed region by use of the quantization table corresponding to the to-be-compressed region; and
an encoding module (160) configured to encode image data quantized by the quantization module to obtain a compressed image.
wherein the first division module (120) is configured to determine a ROI, Region Of Interest, and a non-ROI from the target image, said first division module (120) comprising:
a first detection sub-module (121) configured to detect an image salient region in the target image;
an image segmentation sub-module (122) configured to perform image segmentation on the detected image salient region;
a converging sub-module (123) configured to filter and converge an image segmentation result to obtain at least one candidate ROI; and
a first determination sub-module (124) configured to determine the ROI from the at least one candidate ROI, and determine the region beyond the ROI in the target image as the non-ROI;
wherein said second acquisition module (140) is configured to:
acquire a first kind of quantization tables corresponding to the ROI, and acquire a second kind of quantization tables corresponding to the non-ROI, wherein the quantization scales of the second kind of quantization tables are larger than those of the first kind of quantization tables; and
determine quantization values corresponding to high-frequency parts in the first kind of quantization tables according to values of high-frequency components in the pixel blocks of the ROI and a preset percent, the preset percent being the percent of non-zero values in the quantization result.

4. A computer program including instructions carrying out the steps of an image compression method according to claim 1 or 2, when said program is executed by a computer.

5. A recording medium readable by a computer and having recorded thereon a computer program including instructions carrying out the steps of an image compression method according to claim 1 or 2, when said program is executed by a computer.

## Patentansprüche

1. Bildkompressionsverfahren, **dadurch gekennzeichnet, dass** es umfasst:
Erfassen (S101) eines zu komprimierenden Zielbildes,
Unterteilen (S120) des Zielbildes in mindestens zwei zu komprimierende Bereiche,
Unterteilen (S130) des Zielbildes in Pixelblöcke vorgegebener Größe und Umwandlung der Daten in jedem Pixelblock in Daten im Frequenzbereich,
Erfassen (S140) einer Quantisierungstabelle, die jedem zu komprimierenden Bereich entspricht, wobei verschiedene Quantisierungstabellen für verschiedene zu komprimierende Bereiche erfasst werden und verschiedenen Quantisierungsskalen entsprechen,
Quantisieren (S150) der Frequenzbereichsdaten, die den Pixelblöcken in jedem zu komprimierenden Bereich entsprechen, unter Verwendung der Quantisierungstabelle, die dem zu komprimierenden Bereich entspricht, und
Codieren (S160) der quantisierten Bilddaten, um ein komprimiertes Bild zu erhalten,
wobei das Unterteilen des Zielbildes in mindestens zwei zu komprimierende Bereiche umfasst:
Bestimmen (S220) einer ROI, Region von Interesse, und einer Nicht-ROI in dem Zielbild, und
wobei die Bestimmung der ROI, der Region von Interesse und der Nicht-ROI in dem Zielbild umfasst:
Detektieren (S221) einer markanten Bildregion in dem Zielbild,
Durchführen (S222) einer Bildsegmentierung auf der erkannten markanten Bildregion,
Filtern (S223) und Konvergieren eines Bildsegmentierungsergebnisses, um mindestens einen ROI-Kandidaten zu erhalten, und
Bestimmen (S224) der ROI aus dem mindestens einen ROI-Kandidaten und Bestimmen des Bereichs außerhalb der ROI in dem Zielbild als Nicht-ROI,
wobei das Erfassen (S140) der Quantisierungstabelle, die jedem zu komprimierenden Bereich entspricht, umfasst:
Erfassen (S240) einer ersten Art von Quantisierungstabellen, die der ROI entsprechen, und Erfassen (S240) einer zweiten Art von Quantisierungstabellen, die der Nicht-ROI entsprechen, wobei die Quantisierungsskalen der zweiten Art von Quantisierungstabellen größer sind als die der ersten Art von Quantisierungstabellen, und
Bestimmen von Quantisierungswerten, die Hochfrequenzteilen in der ersten Art von Quantisierungstabellen entsprechen, gemäß Werten von Hochfrequenzkomponenten in den Pixelblöcken der ROI und einem voreingestellten Prozentsatz, wobei der voreingestellte Prozentsatz der Prozentsatz von Nicht-Null-Werten in dem Quantisierungsergebnis ist.

2. Verfahren nach Anspruch 1, **dadurch gekennzeichnet, dass** das Unterteilen des Zielbildes in die Pixelblöcke vorgegebener Größen umfasst: Unterteilen des Zielbildes in 8*8-Pixelblöcke.

3. Bildkompressionsvorrichtung, **dadurch gekennzeichnet, dass** sie umfasst:
ein erstes Erfassungsmodul (110), das dazu konfiguriert ist, ein zu komprimierendes Zielbild zu erfassen,
ein erstes Teilungsmodul (120), das dazu konfiguriert ist, das von dem ersten Erfassungsmodul erfasste Zielbild in mindestens zwei zu komprimierende Bereiche zu unterteilen,
ein zweites Teilungsmodul (130), das dazu konfiguriert ist, das von dem ersten Erfassungsmodul erfasste Zielbild in Pixelblöcke vorgegebener Größe zu unterteilen und Daten in jedem Pixelblock in Frequenzbereichsdaten umzuwandeln,
ein zweites Erfassungsmodul (140), das dazu konfiguriert ist, eine Quantisierungstabelle zu erfassen, die jedem zu komprimierenden Bereich entspricht, der durch das erste Teilungsmodul erhalten wurde, wobei das zweite Erfassungsmodul dazu konfiguriert ist, verschiedene Quantisierungstabellen für verschiedene zu komprimierende Bereiche zu erfassen, wobei verschiedene Quantisierungstabellen verschiedenen Quantisierungsskalen entsprechen,
ein Quantisierungsmodul (150), das dazu konfiguriert ist, die den Pixelblöcken in jedem zu komprimierenden Bereich entsprechenden Frequenzbereichsdaten unter Verwendung der dem zu komprimierenden Bereich entsprechenden Quantisierungstabelle zu quantisieren, und
ein Kodiermodul (160), das dazu konfiguriert ist, die durch das Quantisierungsmodul quantisierten Bilddaten zu kodieren, um ein komprimiertes Bild zu erhalten.
wobei das erste Teilungsmodul (120) dazu konfiguriert ist, eine ROI, eine Region von Interesse, und eine Nicht-ROI aus dem Zielbild zu bestimmen, wobei das erste Teilungsmodul (120) umfasst:
ein erstes Detektionsuntermodul (121), das dazu konfiguriert ist, einen markanten Bildbereich in dem Zielbild zu erkennen,
ein Bildsegmentierungsuntermodul (122), das dazu konfiguriert ist, eine Bildsegmentierung an dem erfassten markanten Bildbereich durchzuführen,
ein Konvergenz-Untermodul (123), das dazu konfiguriert ist, ein Bildsegmentierungsergebnis zu filtern und zu konvergieren, um mindestens einen ROI-Kandidaten zu erhalten, und
ein erstes Bestimmungsuntermodul (124), das dazu konfiguriert ist, die ROI aus der mindestens einen Kandidaten-ROI zu bestimmen und den Bereich außerhalb der ROI im Zielbild als Nicht-ROI zu bestimmen,
wobei das zweite Erfassungsmodul (140) dazu konfiguriert ist:
eine erste Art von Quantisierungstabellen, die der ROI entsprechen, zu erfassen und eine zweite Art von Quantisierungstabellen, die der Nicht-ROI entsprechen, zu erfassen, wobei die Quantisierungsskalen der zweiten Art von Quantisierungstabellen größer sind als die der ersten Art von Quantisierungstabellen, und
Quantisierungswerte, die Hochfrequenzteilen in der ersten Art von Quantisierungstabellen entsprechen, gemäß Werten von Hochfrequenzkomponenten in den Pixelblöcken der ROI und einen voreingestellten Prozentsatz zu bestimmen, wobei der voreingestellte Prozentsatz der Prozentsatz von Nicht-Null-Werten in dem Quantisierungsergebnis ist.

4. Computerprogramm mit Befehlen zum Ausführen der Schritte eines Bildkompressionsverfahrens nach Anspruch 1 oder 2, wenn das Programm von einem Computer ausgeführt wird.

5. Aufzeichnungsmedium, das von einem Computer lesbar ist und auf dem ein Computerprogramm aufgezeichnet ist, das Anweisungen zum Ausführen der Schritte eines Bildkompressionsverfahrens nach Anspruch 1 oder 2 enthält, wenn das Programm von einem Computer ausgeführt wird.

## Revendications

1. Procédé de compression d'image, **caractérisé en ce qu'**il comprend :
l'acquisition (S101) d'une image cible à compresser ;
la division (S120) de l'image cible en au moins deux régions à compresser ;
la division (S130) de l'image cible en blocs de pixels de tailles prédéfinies, et la conversion de données dans chaque bloc de pixels en données du domaine fréquentiel ;
l'acquisition (S140) d'une table de quantification correspondant à chaque région à compresser, dans lequel différentes tables de quantification sont acquises pour différentes régions à compresser et correspondent à différentes échelles de quantification ;
la quantification (5150) des données du domaine fréquentiel correspondant aux blocs de pixels dans chaque région à compresser en utilisant la table de quantification correspondant à la région à compresser ; et
le codage (S160) des données d'image quantifiées pour obtenir une image compressée ;
dans lequel ladite division l'image cible en au moins deux régions à compresser comprend : la détermination (S220) d'une région d'intérêt, ROI, et d'une non ROI dans l'image cible ; et
dans lequel ladite détermination de la région d'intérêt ROI, et de la non ROI dans l'image cible comprend :
la détection (S221) d'une région saillante d'image dans l'image cible ;
la réalisation (S222) d'une segmentation d'image sur la région saillante d'image détectée ;
le filtrage (S223) et la convergence d'un résultat de segmentation d'image pour obtenir au moins une ROI candidate ; et
la détermination (S224) de la ROI à partir de la au moins une ROI candidate, et la détermination de la région au-delà de la ROI dans l'image cible comme étant la non ROI ;
dans lequel ladite acquisition (S140) de la table de quantification correspondant à chaque région à compresser comprend :
l'acquisition (S240) d'un premier type de tables de quantification correspondant à la ROI et l'acquisition (S240) d'un deuxième type de tables de quantification correspondant à la non ROI, dans lequel les échelles de quantification du deuxième type de tables de quantification sont plus grandes que celles du premier type de tables de quantification ; et
la détermination de valeurs de quantification correspondant à des parties à haute fréquence dans le premier type de tables de quantification selon des valeurs de composantes à haute fréquence dans les blocs de pixels de la ROI et un pourcentage prédéfini, le pourcentage prédéfini étant le pourcentage de valeurs non nulles dans le résultat de quantification.

2. Procédé selon la revendication 1, **caractérisé en ce que** la division l'image cible en les blocs de pixels de tailles prédéfinies comprend : la division de l'image cible en blocs de pixels de 8*8.

3. Appareil de compression d'image, **caractérisé en ce qu'**il comprend :
un premier module d'acquisition (110) configuré pour acquérir une image cible à compresser ;
un premier module de division (120) configuré pour diviser l'image cible acquise par le premier module d'acquisition en au moins deux régions à compresser ;
un deuxième module de division (130) configuré pour diviser l'image cible acquise par le premier module d'acquisition en blocs de pixels de tailles prédéfinies, et convertir des données dans chaque bloc de pixels en données du domaine fréquentiel ;
un deuxième module d'acquisition (140) configuré pour acquérir une table de quantification correspondant à chaque région à compresser obtenue par le premier module de division, ledit deuxième module d'acquisition étant configuré pour acquérir différentes tables de quantification pour différentes régions à compresser, dans lequel différentes tables de quantification correspondent à différentes échelles de quantification ;
un module de quantification (150) configuré pour quantifier les données du domaine fréquentiel correspondant aux blocs de pixels dans chaque région à compresser en utilisant la table de quantification correspondant à la région à compresser ; et
un module de codage (160) configuré pour coder des données d'image quantifiées par le module de quantification pour obtenir une image compressée,
dans lequel le premier module de division (120) est configuré pour déterminer une région d'intérêt ROI, et une non ROI à partir de l'image cible, ledit premier module de division (120) comprenant :
un premier sous-module de détection (121) configuré pour détecter une région saillante d'image dans l'image cible ;
un sous-module de segmentation d'image (122) configuré pour réaliser une segmentation d'image sur la région saillante d'image détectée ;
un sous-module de convergence (123) configuré pour filtrer et faire converger un résultat de segmentation d'image pour obtenir au moins une ROI candidate ; et
un premier sous-module de détermination (124) configuré pour déterminer la ROI à partir de la au moins une ROI candidate, et déterminer la région au-delà de la ROI dans l'image cible comme étant la non ROI ;
dans lequel ledit deuxième module d'acquisition (140) est configuré pour :
acquérir un premier type de tables de quantification correspondant à la ROI, et acquérir un deuxième type de tables de quantification correspondant à la non ROI, dans lequel les échelles de quantification du deuxième type de tables de quantification sont plus grandes que celles du premier type de tables de quantification ; et
déterminer des valeurs de quantification correspondant à des parties à haute fréquence dans le premier type de tables de quantification selon des valeurs de composantes à haute fréquence dans les blocs de pixels de la ROI et un pourcentage prédéfini, le pourcentage prédéfini étant le pourcentage de valeurs non nulles dans le résultat de quantification.

4. Programme informatique comportant des instructions effectuant les étapes d'un procédé de compression d'image selon la revendication 1 ou 2, lorsque ledit programme est exécuté par un ordinateur.

5. Support d'enregistrement lisible par un ordinateur et sur lequel est enregistré un programme informatique comportant des instructions effectuant les étapes d'un procédé de compression d'image selon la revendication 1 ou 2, lorsque ledit programme est exécuté par un ordinateur.
